**Europäisches Patentamt**

**European Patent Office**

**Office européen des brevets**

(19)

(11) **EP 1 542 300 A2**

(12) # EUROPEAN PATENT APPLICATION

(43) Date of publication:
**15.06.2005 Bulletin 2005/24**

(51) Int Cl.[7]: **H01M 8/02**, B22D 29/00

(21) Application number: **04257690.0**

(22) Date of filing: **10.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **12.12.2003 JP 2003414235**
           **18.11.2004 JP 2004334254**

(71) Applicant: **NISSHINBO INDUSTRIES, INC.**
**Chuo-ku, Tokyo 103 (JP)**

(72) Inventors:
- **Tanno, Fumio**
  **c/o Miai Plant, Nisshinbo Industries**
  **Okazaki-shi, Aichi-ken (JP)**
- **Shiji, Naoki c/o Miai Plant, Nisshinbo Industries,**
  **Aichi-ken (JP)**

(74) Representative: **Stuart, Ian Alexander et al**
**Mewburn Ellis LLP**
**York House**
**23 Kingsway**
**London WC2B 6HP (GB)**

(54) **Fuel cell separator**

(57)     Fuel cell separators which are made by shaping a composition that includes a thermosetting resin, an artificial graphite with an average particle size of 20 to 70 µm and an internal mold release agent and which have a surface with an average roughness Ra of 1.0 to 5.0 µm are very hydrophilic, and thus facilitate the removal of water that forms during power generation by the fuel cell. Such separators also have a low contact resistance with electrodes in the fuel cell.

**EP 1 542 300 A2**

## Description

The present invention relates to a fuel cell separator.

Fuel cells are devices which, when supplied with a fuel such as hydrogen and with atmospheric oxygen, cause the fuel and oxygen to react electrochemically, producing water and directly generating electricity. Because fuel cells are capable of achieving a high fuel-to-energy conversion efficiency and are environmentally friendly, they are being developed for a variety of applications, including small-scale local power generation, household power generation, simple power supplies for isolated facilities such as campgrounds, mobile power supplies such as for automobiles and small boats, and power supplies for satellites and space development.

Such fuel cells, and particularly solid polymer fuel cells, are built in the form of modules composed of a stack of at least several tens of unit cells. Each unit cell has a pair of plate-like separators with raised areas on either side thereof that define a plurality of channels for the flow of gases such as hydrogen and oxygen. Disposed between the pair of separators in the unit cell are a solid polymer electrolyte membrane and gas diffusing electrodes made of carbon paper.

One role of the fuel cell separators is to confer each unit cell with electrical conductivity. In addition, the separators provide flow channels for the supply of fuel and air (oxygen) to the unit cells and also serve as separating boundary walls. Characteristics required of the separators include high electrical conductivity, high gas impermeability, electrochemical stability and hydrophilicity.

The water formed by the reaction between the gases during power generation by the fuel cell is known to have a large effect on the fuel cell characteristics. Of the properties desired in a fuel cell, the ability to rapidly remove water that has formed during power generation is the most important. Because this ability to remove water depends on the hydrophilicity of the separator, there exists a need to enhance this hydrophilicity.

Techniques for enhancing the hydrophilicity of separators include the following prior-art methods:

(1) coating the surface of the separator with a hydrophilic inorganic powder (JP-A 58-150278),
(2) bonding a sheet of hydrophilic inorganic fibers and organic fibers to the surface of the separator (JP-A 63-110555),
(3) bonding to the separator a preformed sheet in which have been incorporated hydrophilic inorganic fibers and powder or hydrophilic organic fibers and powder (JP-A 10-3931), and
(4) dipping into acid the portions of the separator that will come into contact with electrodes (JP-A 11-297338).

In above prior-art method (1), the hydrophilic layer composed of inorganic powder that has been coated onto the separator surface is subject to peeling or wear during fuel cell assembly. As a result, the hydrophilicity enhancing effect tends to be inadequate.

In prior-art method (2), the sheet on the separator surface may separate off or may crease on the flow channel side, lowering the hydrophilicity of the separator and its ability to remove water.

In prior-art method (3), the incorporation of a large amount of inorganic fibers or organic fibers to enhance the hydrophilic properties gives rise to a new problem--a decline in the electrical conductivity.

In prior-art method (4), acidic solution remaining in the separator may leach out during fuel cell operation and also may dissolve resin within the separator.

By practising a preferred embodiment of the invention, one may provide fuel cell separators which have a high hydrophilicity and are thus capable of easily removing water that forms as a result of power generation by the fuel cell, and which have a low contact resistance with electrodes in the fuel cell.

We have discovered that, in fuel cell separators made by shaping a composition containing a thermosetting resin, an artificial graphite and an internal mold release agent, by using an artificial graphite having an average particle size within a specific range and by setting the average surface roughness Ra of the separator within a specific range, the hydrophilicity of the separator can be increased, enabling the easy removal of water that forms as a result of power generation by the fuel cell, in addition to which the contact resistance with electrodes in the fuel cell can be minimized.

Accordingly, the invention provides a fuel cell separator which is made by shaping a composition that includes a thermosetting resin, an artificial graphite with an average particle size of 20 to 70 μm and an internal mold release agent, and which has a surface with an average roughness Ra of 1.0 to 5.0 μm.

The fuel cell separator typically contains 10 to 30 parts by weight of the thermosetting resin and 0.1 to 1.5 parts by weight of the internal mold release agent per 100 parts by weight of the artificial graphite. The artificial graphite is preferably obtained by firing needle coke at 2,000 to 3,000°C.

In the fuel cell separator of the invention, the surface generally has an average spacing between peaks Sm of 100 to 200 μm. Moreover, the surface typically is a gas flow channel face which is preferably obtained by surface treatment with an alumina abrasive grain having a grit size of 150 to 320 and which has a wetting tension of preferably 40 to 70 mN/m.

In the inventive fuel cell separator, it is desirable for the surface to be a surface of contact between the fuel cell separator and an electrode. The surface of contact between the fuel cell separator and an electrode is preferably obtained by surface treatment with an alumina abrasive grain having a grit size of 150 to 320.

Because it is made by shaping a composition that includes a thermosetting resin, an artificial graphite having an average particle size of 20 to 70 μm and an internal mold release agent, and because it has a surface with an average roughness Ra of 1.0 to 5.0 μm, the fuel cell separator of the invention may be endowed with a high hydrophilicity which enables the easy removal of water that has formed as a result of power generation by the fuel cell, in addition to which contact resistance is minimized. Fuel cells provided with the fuel cell separators of the invention may thus be capable of maintaining a stable power generating efficiency over an extended period of time.

## DETAILED DESCRIPTION OF THE INVENTION

As noted above, the fuel cell separator of the invention is made by shaping a composition that includes a thermosetting resin, an artificial graphite with an average particle size of 20 to 70 μm, and an internal mold release agent. The fuel cell separator has a surface with an average roughness Ra of 1.0 to 5.0 μm. "Shaping," as used herein, refers to a molding or forming operation that renders the composition into a desired fuel cell separator shape.

In the practice of the invention, the thermosetting resin is not subject to any particular limitation. Use may be made of any of the various types of thermosetting resins from which fuel cell separators have hitherto been molded or formed. Illustrative examples include any one or combination of two or more of the following: resol-type phenolic resins, epoxy resins, polyester resins, urea resins, melamine resins, silicone resins, vinyl ester resins, diallyl phthalate resins and benzoxazine resins. Of these, benzoxazine resins, epoxy resins and resol-type phenolic resins are preferred on account of their excellent heat resistance and mechanical strength.

The composition which includes a thermosetting resin, an artificial graphite with an average particle size of 20 to 70 μm and an internal mold release agent (which composition is referred to hereinafter as the "fuel cell separator-forming composition") has a thermosetting resin content that, while not subject to any particular limitation, is preferably 10 to 30 parts by weight, and more preferably 15 to 25 parts by weight, per 100 parts by weight of the artificial graphite. At a thermosetting resin content of less than 10 parts by weight, fuel cell separators made from the composition may be subject to gas leakage and have a decreased strength. On the other hand, at more than 30 parts by weight, such separators may have a decreased electrical conductivity.

Illustrative examples of the artificial graphite include graphite obtained by firing needle coke or lump coke, graphite obtained by grinding electrodes to a powder, coal pitch, petroleum pitch, coke, activated carbon, glassy carbon, acetylene black, carbon black and Ketjenblack. Any one or combination of two or more thereof may be used. Of these, graphite obtained by firing needle coke at 2,000 to 3,000°C is preferred on account of its high degree of graphitization and excellent electrical conductivity.

In the practice of the invention, the artificial graphite has an average particle size of 20 to 70 μm, preferably 30 to 60 μm, and more preferably 40 to 50 μm.

At an average particle size of less than 20 μm, the thermosetting resin readily coats the surface of the graphite, lowering the surface area of contact between graphite particles and very likely diminishing the electrical conductivity of the separator itself. On the other hand, at an average particle size of more than 70 μm, the thermosetting resin tends to make its way into pores between the graphite particles, lowering the surface area of contact between the particles. Here too, the likely result is a diminution in the electrical conductivity of the separator.

Hence, artificial graphite having an average particle size outside the range specified herein encourages the formation of a thermosetting resin layer on the surface of the graphite particles or in pores between the particles. In either case, it is very likely that the separator itself will have a lower electrical conductivity.

Although a separator which is molded or formed from a composition containing an artificial graphite powder having an average particle diameter within a range of 20 to 70 μm generally has at the surface thereof a layer of thermosetting resin between the graphite particles, by setting the surface roughness of the separator to the average roughness Ra described in detail below, this thermosetting resin layer is removed, enabling a separator to be achieved which has an excellent hydrophilicity and a low contact resistance.

To further improve the hydrophilic properties of the fuel cell separator and the contact resistance-lowering effects, it is preferable for the artificial graphite to have an average particle size of 30 to 60 μm and to contain not more than 5% of particles having a size of 5 μm or less and not more than 3% of particles having a size of 100 μm or more. An artificial graphite which has an average particle size of 40 to 50 μm and contains not more than 5% of particles having a size of 5 μm or less and not more than 1% of particles having a size of 100 μm or more is most preferred.

"Average particle size" refers herein to a value measured using a Microtrak particle size analyzer.

The internal mold release agent may be any internal mold release agent that has hitherto been used in the molding or forming of separators. Illustrative examples include stearic acid-based waxes, amide-based waxes, montanic acid-based waxes, carnauba wax and polyethylene waxes. These may be used singly or as combinations of two or more thereof.

The content of internal mold release agent in the fuel cell separator-forming composition, while not subject to any particular limitation, is preferably 0.1 to 1.5 parts by weight, and more preferably 0.3 to 1.0 part by weight, per 100 parts by weight of the artificial graphite. At an internal mold release agent content of more than 1.5 parts by weight, problems such as bleeding of the internal mold release agent to the separator surface may arise.

The fuel cell separator of the invention has an average surface roughness Ra in a range of 1.0 to 5.0 μm.

At an average roughness Ra of less than 1.0 μm, the surface tension of water is maintained, making it easier for water to aggregate within the flow channels formed in the separator surface. Moreover, the presence of a thermosetting resin layer between the graphite particles at the surface of the separator reduces the surface area of contact between an adjoining electrode and the graphite, making an increase in the contact resistance very likely. At an average roughness Ra of more than 5.0 μm, the hydrophilicity is enhanced, but graphite tends to be shed from the separator surface. Hence, in the latter case as well, there is a high likelihood that the separator will have an undesirably small surface area of contact with adjoining electrodes and an increased contact resistance.

By contrast, at an average roughness Ra of 1.0 to 5.0 μm, the balance in the surface tension of water breaks down, enhancing the hydrophilicity on the inner faces of the flow channels formed at the surface of the separator. Moreover, the thermosetting resin layer at the surface of the separator is removed, thus increasing the surface area of contact with adjoining electrodes and making it possible to reduce the contact resistance.

To additionally enhance the hydrophilicity of the fuel cell separator and increase even further the contact resistance-lowering effect, the average surface roughness Ra is more preferably 1.5 to 4.0 μm, and even more preferably 3.5 to 4.0 μm.

Various known surface treatment techniques may be used to set the separator to the desired surface roughness, although a shot blasting technique is preferred. The most preferred technique involves the use of an alumina abrasive grain having a grit size of 150 to 320 (sometimes referred to below as "WA") to suitably set the average roughness Ra within a range of 1.0 to 5.0 μm.

WA has a grit size which, as noted above, is preferably from 150 to 320. At a grit size of less than 150, surface treatment to an average roughness Ra of at least 1.0 μm is difficult, and so resin tends to remain on the surface layer. At a grit size of more than 320, the abrasive grain is too coarse, which tends to result in uneven surface treatment and may thus allow resin to remain on the surface layer.

To more efficiently remove resin from the surface layer of the fuel cell separator, the use of WA having a grit of 180 to 280 is even more preferred. The use of WA having a grit of 220 to 240 is especially preferred.

The portions of the separator surface that are administered surface treatment may be the gas flow channel faces and faces which later become surfaces of contact between the separator and an electrode.

The surface of the inventive fuel cell separator has an average spacing between peaks Sm in a range of 100 to 200 μm, preferably 150 to 200 μm, and more preferably 180 to 200 μm. By having the average spacing Sm fall within this range, the separator surface can be made even more hydrophilic.

The fuel cell separator of the invention is made by shaping a fuel cell separator-forming composition. Any of various known methods for preparing the composition and for shaping the separator may be used without particular limitation.

For example, preparation of the composition may be carried out by mixing in any order and in the required proportions the above-mentioned thermosetting resin, artificial graphite and internal mold release agent. Examples of mixers that may be used for this purpose include planetary mixers, ribbon blenders, Loedige mixers, Henschel mixers, rocking mixers and Nauta mixers. The separator shaping method also is not subject to any particular limitation. For example, use can be made of injection molding, transfer molding, compression molding, extrusion or sheet thermoforming.

In addition to the above-indicated materials, the fuel cell separator of the invention may also contain additives, including various types of fibers (e.g., organic fibers such as carbon fibers and cellulose fibers, and inorganic fibers) and inorganic fillers (e.g., alumina, silica, silicon carbide), insofar as the objects of the invention are not compromised.

Because the above-described fuel cell separator of the invention has a very high hydrophilicity and its contact resistance has been minimized, fuel cells provided with such separators can maintain a stable power generating efficiency over an extended period of time. Fuel cell separators endowed with such properties are particularly well-suited for use as separators in solid polymer fuel cells.

A solid polymer fuel cell is generally composed of a stack of many unit cells, each of which is constructed of a solid polymer membrane disposed between a pair of electrodes that are in turn sandwiched between a pair of separators which form channels for the supply and removal of gases. The fuel cell separator of the invention can be used as some or all of the plurality of separators in the fuel cell.

EXAMPLES

The following examples and comparative examples are provided to illustrate the invention and are not intended to limit the scope thereof. Average particle sizes given below are values measured using a Microtrak particle size analyzer.

Examples 1 to 9, Comparative Examples 1 to 8

In each example, a fuel cell separator-forming composition was prepared by charging a Henschel mixer with 100 parts by weight of artificial graphite powder (SGP, available from SEC Corporation; produced by firing needle coke) having the average particle size shown in Table 1, 24 parts by weight of phenolic resin (PL 4804, available from Gun Ei Chemical Industry Co., Ltd.) as the thermosetting resin and 0.3 part by weight of carnauba wax (Carnauba Wax F2, available from Dainichi Chemical Industry Co., Ltd.) as the internal mold release agent, then mixing for 3 minutes at 1,500 rpm.

In each example, the resulting composition was poured into a 300x300 mm mold and compression molded at a mold temperature of 180°C, a molding pressure of 29.4 MPa and a molding time of 2 minutes to form molded bodies. The molded bodies were surface treated as described below, giving fuel cell separator samples having the various average surface roughnesses Ra and average spacings between peaks Sm indicated in Table 1.

Surface Treatment Method:

The molded body in each example was surface treated by shot blasting with the WA shown in Table 1 (White Morundum WA F220, an alumina abrasive grain produced by Showa Denko K.K.) at a nozzle pressure of 0.25 MPa.

The fuel cell separator samples obtained in the above examples and comparative examples were measured and evaluated for average surface roughness Ra, average spacing between peaks Sm, specific resistance, contact resistance and wetting tension. The results are presented in Table 1. The measurement and evaluation methods that were used are described below.

1. Average Roughness Ra and Average Spacing Between Peaks Sm

Measured in accordance with JIS B0601-1994 using a surface roughness tester (Surfcom 1800D, available from Tokyo Seimitsu Co., Ltd.) having a probe tip diameter of 5 $\mu$m.

2. Specific Resistance

Measured based on the test methods for determining the conductor resistance and volume resistivity of metallic resistance materials set forth in JIS C2525.

3. Contact Resistance

(1) Carbon Paper + Separator Sample:

Two sheets of the respective separator samples obtained as described above were stacked together, and carbon paper (TGP-H060, available from Toray Industries, Inc.) was placed above and below the two stacked separator samples. Copper electrodes were placed above and below the resulting stack. A surface pressure of 1 MPa was then applied vertically to the entire stack, and the voltage was measured by a four-terminal method.

(2) Carbon Paper:

Copper electrodes were placed above and below a sheet of carbon paper, following which a surface pressure of 1 MPa was applied vertically thereto and the voltage was measured by a four-terminal method.

(3) Method for Computing Contact Resistance:

The voltage drop between the separator samples and the carbon paper was determined from the respective voltages obtained in (1) and (2) above, and the contact resistance was computed as follows.

Contact Resistance =

(voltage drop $\times$ surface area of contact)/current

4. Wetting Tension:

Measured based on JIS K6768 (Test Method for Wetting Tension of Plastic Films).

Table 1

| | Artificial graphite average particle size (μm) | Grit size of abrasive grain | Average surface roughness $R_a$ (μm) | Sm (μm) | Specific resistance (mΩ · cm) | Contact resistance (mΩ·cm$^2$) | Wetting tension (mN/m) |
|---|---|---|---|---|---|---|---|
| Example 1 | 30 | 150 | 4.0 | 188 | 6.0 | 6.5 | 67 |
| Example 2 | 30 | 220 | 3.5 | 180 | 5.8 | 6.0 | 67 |
| Example 3 | 30 | 300 | 1.5 | 135 | 6.5 | 6.0 | 42 |
| Example 4 | 50 | 150 | 4.2 | 198 | 5.3 | 5.7 | 67 |
| Example 5 | 50 | 220 | 3.3 | 180 | 5.0 | 5.6 | 65 |
| Example 6 | 50 | 300 | 1.2 | 140 | 6.1 | 5.6 | 42 |
| Example 7 | 70 | 150 | 4.6 | 200 | 4.8 | 5.2 | 67 |
| Example 8 | 70 | 220 | 4.0 | 192 | 5.0 | 5.0 | 67 |
| Example 9 | 70 | 300 | 1.0 | 113 | 5.0 | 5.0 | 40 |
| comparative Example 1 | 10 | 100 | 5.5 | 243 | 12.5 | 15.0 | 54 |
| Comparative Example 2 | 10 | 220 | 3.3 | 198 | 13.0 | 14.9 | 54 |
| Comparative Example 3 | 10 | 400 | 0.4 | 77 | 12.4 | 20.0 | 34 |
| Comparative Example 4 | 50 | 100 | 6.0 | 288 | 5.3 | 10.1 | 60 |
| Comparative Example 5 | 50 | 400 | 0.6 | 82 | 5.5 | 15.3 | 37 |
| Comparative Example 6 | 100 | 100 | 6.6 | 243 | 4.5 | 12.0 | 54 |
| Comparative Example 7 | 100 | 220 | 3.2 | 198 | 4.5 | 12.3 | 54 |
| Comparative Example 8 | 100 | 400 | 0.4 | 77 | 4.3 | 20.0 | 34 |

As is apparent from the results in Table 1, because the fuel cell separators obtained in the above examples according to the invention were made using artificial graphite of an average particle size of 20 to 70 µm and have [0056] an average surface roughness Ra in a range of 1.0 to 5.0 µm, their specific resistance and contact resistance have been held to lower levels than in the fuel cell separators obtained in the comparative examples, in addition to which they have a higher wettability.

**Claims**

1. A fuel cell separator made by shaping a composition comprising a thermosetting resin, an artificial graphite with an average particle size of 20 to 70 µm and an internal mold release agent, which separator has a surface with an average roughness Ra of 1.0 to 5.0 µm.

2. The fuel cell separator of claim 1 which contains 10 to 30 parts by weight of the thermosetting resin and 0.1 to 1.5 parts by weight of the internal mold release agent per 100 parts by weight of the artificial graphite.

3. The fuel cell separator of claim 1 or 2, wherein the artificial graphite is obtained by firing needle coke at 2,000 to 3, 000° C.

4. The fuel cell separator of any one of claims 1 to 3, wherein the surface has an average spacing between peaks Sm of 100 to 200 µm.

5. The fuel cell separator of any one of claims 1 to 4, wherein the surface is a gas flow channel face.

6. The fuel cell separator of claim 5, wherein the gas flow channel face is obtained by surface treatment with an alumina abrasive grain having a grit size of 150 to 320.

7. The fuel cell separator of claim 5, wherein the gas flow channel face has a wetting tension of 40 to 70 mN/m.

8. The fuel cell separator of any one of claims 1 to 4, wherein the surface is a surface of contact between the fuel cell separator and an electrode.

9. The fuel cell separator of claim 8, wherein the surface of contact between the fuel cell separator and an electrode is obtained by surface treatment with an alumina abrasive grain having a grit size of 150 to 320.

10. A method of producing a fuel cell separator according to any preceding claim comprising the step of shaping said composition.